# EUROPÄISCHE PATENTSCHRIFT

(11) **EP 1 179 768 B1**
(45) Veröffentlichungstag und Bekanntmachung des Hinweises auf die Patenterteilung: **01.09.2010**
(21) Anmeldenummer: 01118370.4
(22) Anmeldetag: 27.07.2001
(51) Int. Cl.: G06F 3/033

(54) **Computersystem mit einem Basisrechner und mehreren Bedienterminals**
Computer system with a central computer and a plurality of control terminals
Système informatique avec un ordinateur central et une pluralité de terminaux de commande

(30) Priorität: 09.08.2000 DE 10038820; 14.09.2000 DE 10045436
(43) Veröffentlichungstag der Anmeldung: 13.02.2002
(73) Patentinhaber: SIEMENS AKTIENGESELLSCHAFT, 80333 München (DE)
(72) Erfinder: Weber, Konrad, 96155 Buttenheim (DE)

(56) Entgegenhaltungen:
- WO-A-96/24923
- DE-A1- 4 406 668
- US-A- 5 768 492
- US-A- 5 777 898

## Beschreibung

Die Erfindung richtet sich auf ein Computersystem und ein Betriebsverfahren dafür, entsprechend des Anspruchs 1 bzw. des Anspruchs 9.

Derartige Computersysteme und Betriebsverfahren sind aus dem Stand der Technik bekannt. So offenbaren z.B. die DE 44 06 668 A1 und das US-Patent US 5,768,492 jeweils Computersysteme mit zwei bzw. mehreren Touch Panels als Eingabemedium.

In der US 5,777,898 und der Veröffentlichungsschrift WO 96/24923 wird ein Computer mit einem Touch Panel als Eingabemedium offenbart, wobei weiterhin jeweils ein Verfahren zur Kalibrierung des jeweiligen Touch Panels dargestellt wird.

Es ist mittlerweile Standard geworden, dass technische Einrichtungen der vielfältigsten Art durch einen Computer gesteuert oder überwacht werden. Hierbei ist es üblich, miteinander durch ihre Funktion gekoppelte Anlagenteile von einem gemeinsamen Computer steuern oder überwachen zu lassen, so dass Schnittstellenprobleme innerhalb einer Anlage durch eine koordinierte Aktivierung der einzelnen Anlagenkomponenten vermieden werden können. Dies führt dazu, dass bei langgestreckten Anlagen, die bspw. durch ein gemeinsames Fließband oder ein sonstiges Transportsystem miteinander gekoppelt sind, u.a. Fertigungsstraßen in der Autoindustrie, von einem einzigen entsprechend leistungsfähigen Computer koordiniert werden.

Da solchen falls andererseits eine Vielzahl von Arbeitsmaschinen oder sonstigen Aggregaten von dem Bedienungs- oder Wartungspersonal eingerichtet bzw. gesteuert werden müssen, sind zumeist im Bereich jeder Anlagenkomponente Bedienterminals vorgesehen, von wo aus eine Kommunikation mit dem für die gesamte Anlage gemeinsamen Computer möglich ist. Dadurch werden einerseits lange Wege erspart, andererseits kann das Bedienpersonal die Reaktion des Systems auf die jeweiligen Eingaben sofort erkennen.

Um ein derartiges Computersystem mit einem eine gesamte Anlage steuernden oder überwachenden Basisrechner und mehreren, verteilt angeordneten Bedienterminals steuerungstechnisch zu koordinieren, ist bislang vorgesehen worden, dass jedes Bedienterminal über eine Anzeigeeinrichtung und wenigstens eine Eingabeeinrichtung verfügt, wobei die Anzeigeeinrichtungen sämtlicher Bedienterminals vorzugsweise parallel betrieben werden, während die Eingabeeinrichtungen der unterschiedlichen Bedienterminals durch eine im Bereich des Basisrechners angeordnete Prioritätssteuerung funktionell koordiniert werden. Dies kann bspw. derart erfolgen, dass standardmäßig alle Bedienungseinrichtungen aktiv sind, bis an einem Bedienterminal eine beliebige Eingabe erfolgt. Sodann erhält dieses Priorität und bleibt zumindest für einen vorgegebenen Zeitraum ausschließlich für eine weitere Eingabe empfangsbereit, während die Eingabeeinrichtungen der übrigen Bedienterminals für diesen Zeitraum stillgelegt werden. Die jeweilige Prioritätsvergabe kann mittels Signaleinrichtungen an den verschiedenen Bedienterminals angezeigt werden, bspw. durch eine grüne Lampe für "empfangsbereit" und eine rote Lampe für "stillgelegt". Die Prioritätsvergabe kann auch nach einem anderen System erfolgen, bspw. durch je eine Prioritätstaste an den Bedienterminals, mit der die Zuordnung der Priorität zu dem betreffenden Bedienterminal angefordert werden kann.

Ein derartiges System ist vergleichsweise einfach, da in den Bedienterminals keine Querverbindungen zwischen den einzelnen Datenendgeräten bestehen, so dass der downlinkseitige Informationsfluss von dem Basisrechner zu dem Bedienterminal standardmäßig zu der betreffenden Anzeigeeinrichtung weitergeleitet werden kann. Da die Anzeigeeinheiten aller Bedienterminals parallel betrieben werden, unabhängig davon, welchem Bedienterminal die Eingabepriorität zugeteilt ist, können die betreffenden Ausgangssignale des Basisrechners in einer mit diesem gekoppelten Peripherieschnittstelle vervielfältigt und an alle Bedienterminals verschickt werden. Andererseits bilden standardmäßige Eingabegeräte wie Tastatur und Maus im Rahmen des gattungsgemäßen Computersystems eine reine Informationsquelle, deren Eingabesignale nur zu dem Basisrechner übertragen werden müssen. Im Rahmen der Peripherieschnittstelle desselben werden diese Eingabesignale von den sternförmig zusammenlaufenden Übertragungskanälen mit einem Multiplexer auf einem gemeinsamen Informationskanal zusammengeführt, der sodann mit dem Basisrechner verbunden ist. Da die Prioritätssteuerung von der Peripheriebaugruppe vorgenommen wird, erhält der Basisrechner keinerlei Information darüber, von welchem Bedienterminal ein gerade empfangenes Eingabesignal stammt. Dies ist auch völlig irrelevant, da alle Bedienterminals völlig gleich sind, sofern sie durch die Peripheriebaugruppe jeweils die Eingabepriorität erhalten haben.

In den vergangenen Jahren haben jedoch berührungssensitive Flächen, die sog. touch panels eine weite Verbreitung erfahren. Diese werden über einem Monitor (Bildröhre, Flüssigkristall-Bildschirm o. dgl.) appliziert. Je nach Ausführungsform werden gemäß unterschiedlicher, physikalischer Prinzipien Informationen über den Ort einer mechanischen Druckeinwirkung erzeugt. Bspw. bestehen resistive touch panels aus zwei in einem Abstand voneinander angeordneten, leitenden und widerstandsbehafteten Schichten, die jeweils an zwei gegenüberliegenden Kanten mit einer Spannungsquelle verbindbar sind. Wird hierbei eine derartige Folie mit einer Spannung beaufschlagt, so ergibt sich ein kontinuierlicher Spannungsabfall, und das Spannungspotential an einem durch einen Fingerdruck verursachten Berührungspunkt kann auf die andere, ursprünglich spannungslose Folie übertragen und über deren Anschlüsse gemessen werden. Die Anschlüsse der zweiten Folie sind bspw. um 90 Grad gegenüber der ersten Folie verdreht, so dass durch einen inversen Betrieb (bei Beaufschlagung der zweiten Folie mit einer konstanten Spannung) ein der zweiten Koordinate des Druckpunktes entsprechender Spannungswert gemessen werden kann. Die beiden Spannungswerte können in Digitalwerte gewandelt werden und bilden somit ein x-y-Koordinatenpaar, welches Aufschluss über die Lage des betreffenden Druckpunktes gibt. Indem diese Koordinaten von dem betreffenden Bedienterminal zu dem Basisrechner übertragen werden, kann dieser erkennen, welcher auf der Anzeige dargestellten Schaltfläche der betreffende Fingerdruck zuzuordnen ist, und kann damit die Eingabeinformation entschlüsseln und die betreffenden Aktionen in die Wege leiten. Derartige touch panels sind zwar äußerst praktisch, da sich rein durch Software die unterschiedlichsten Schaltflächen auf einem Bildschirm erzeugen lassen, welche sodann durch einen Fingerdruck an der betreffenden Stelle des darüber befindlichen touch panels betätigt werden können. Andererseits werden eben gerade durch diese Trennung von Schaltfläche (Anzeige) und Schaltfunktion (touch panel) Probleme hervorgerufen, da sich bei dem Applizieren eines touch panels auf einem Bildschirm Verschiebungen ergeben können, auch führen bereits geringfügige Dehnungen einer touch panel-Folie zu einem veränderten Maßstab, was auch bei einstellbaren Monitoren durch individuell abweichende Einstellungen hervorgerufen werden kann. Es ist daher unerlässlich, für eine exakte Zuordnung von Schaltfunktion und Schaltfläche ein auf einem Bildschirm appliziertes touch panel zu kalibrieren. D. h., es müssen Verschiebungs-Offsetwerte, ggf. auch Dehnungswerte oder gar Werte zu Kompensation von Verdrehungen ermittelt werden, die sodann mit allen folgenden Messwerten der touch panel-Einheit verrechnet werden müssen, um den wahren Ort einer Druckstelle in Bezug auf die auf der Anzeigeeinrichtung dargestellten Schaltflächen zu ermitteln. Für derartige Kalibrierungen existieren Softwarepakete, welche auf einem Computer mit touch panel-Bildschirm geladen werden können, damit sodann im Rahmen eines Kalibrierungsprogrammdurchlaufs die optimalen Kompensationsparameter ermittelt werden können. Derartige Softwarepakete sind jedoch bisher im Rahmen eines gattungsgemäßen Computersystems nicht verwendbar, da sie ausschließlich für einen einzigen touch panel-Bildschirm Kompensationsparameter ermitteln und speichern können; bei dem erfindungsgemäßen Computersystem, wo eine Vielzahl von Bedienterminals mit touch panel-Bildschirmen ausgerüstet sind, würde bei der nachfolgenden Kalibrierung eines weiteren Bedienterminals der vorangehend ermittelte Kalibrierungs-Parametersatz überschrieben werden. Aus diesem Grund konnten gattungsgemäße Computersysteme mit mehreren, an dem selben Basisrechner angeschlossenen Bedienterminals bisher nicht mit touch panel-Bildschirmen ausgerüstet werden.

Aus diesem Nachteil des beschriebenen Stands der Technik resultiert das die Erfindung initiierende Problem, im Rahmen eines gattungsgemäßen Computersystems eine derartige Struktur zu finden, dass mit einem möglichst geringen Zusatzaufwand auch touch panel-Bildschirme im Rahmen aller angeschlossenen Bedienterminals verwendet werden können.

Die Lösung dieses Problems gelingt im Rahmen eines erfindungsgemäßen Verfahrens dadurch, dass die bei der Kalibrierung der touch panels vorzunehmenden Rechen- und/oder Verfahrensschritte für alle Bedienterminals zentral, aber individuell von dem Basisrechner vorgenommen und/oder gesteuert werden, indem unter einer gemeinsamen Kalibrierungssoftware des Basisrechners erforderliche Offset- oder sonstige Korrekturparameter jedes beliebigen touch panels bestimmt und an individuellen, dem betreffenden touch panel eindeutig zugeordneten oder zuordenbaren Speicherzellen zwecks Verrechnung mit allen weiteren Eingangssignalen des betreffenden touch panels hinterlegt werden.

Indem die Erfindung darauf verzichtet, im Rahmen der Bedienterminals eine direkte Kopplung zwischen der Anzeige und der darauf applizierten, berührungssensitiven Fläche zu schaffen, welche hinreichend intelligent wäre, um ein Kalibrierungsprogramm abzuarbeiten, kann ein erhöhter Hardware-Aufwand, insbesondere die Verwendung von Mikroprozessoren, Programmspeichern etc. vermieden werden. Statt dessen kann zu diesem Zweck die ohnehin bereits vorhandene Intelligenz des Basisrechners verwendet werden. Auch muss auf das häufig im Rahmen erfindungsgemäßer Computersysteme anzutreffende Grundprinzip der gemeinsamen Ansteuerung der Anzeigeeinrichtungen aller Bedienterminals nicht verzichtet werden, und ggf. kann auch eine mit einem touch panel mitgelieferte Kalibrierungssoftware verwendet werden. Durch die erfindungsgemäßen Maßnahmen kann damit sowohl der Hard- wie auch der Softwareaufwand auf ein Minimum reduziert werden. Die hierzu erforderliche Modifikation des Computersystems bewegt sich nahezu ausschließlich im Bereich der Schnittstellen zwischen den verschiedenen Komponenten, nämlich dem Basisrechner einerseits und den Bedienterminals andererseits. Indem diese Schnittstellenbausteine derart modifiziert werden, dass eine Erkennung des jeweils mit dem Basisrechner kommunizierenden Bedienterminals möglich ist, können mit einer weitgehend unveränderten Original-Kalibrierungssoftware ermittelte Offset- oder sonstige Korrekturparameter zu individualisierten Speicherzellen gelenkt werden, wo sodann die Abspeicherung derart erfolgt, dass ein gegenseitiges Überschreiben von Parametern unterschiedlicher touch panels nicht möglich ist. Dadurch ist es bei allen im Anschluss an die Kalibrierung des Computersystems eintreffenden touch panel-Signalen möglich, die individuell jeweils hierfür zu verwendenden Korrekturparameter aus der dem betreffenden touch panel zugeordneten Speicherzelle auszulesen und zwecks Signalkorrektur zu verwenden. Da diese Verrechnung mit einfachsten, mathematischen Operationen durchgeführt werden kann, können hierzu ggf. auch dezentral angeordnete Hardwarekomponenten verwendet werden, um dem Basisrechner bereits individuell korrigierte touch panel-Signale zuzuführen und diesen dadurch hinsichtlich der erforderlichen Berechnungszeit zu entlasten.

Es hat sich als günstig erwiesen, dass die Kalibrierung des touch panels eines Bedienterminals auf eine von dort eingegebene Anforderung hin eingeleitet wird.

Diese Maßnahme dient zur Vereinfachung der Kommunikation mit einer Original-Kalibrierungssoftware. Sofern die Prioritätssteuerung insbesondere im Rahmen des erfindungsgemäßen Schnittstellensystems bei Aufruf des Kalibrierungsprogrammes bereits dem zu kalibrierenden Bedienterminal zugewiesen ist, kann die Kalibrierungssoftware ohne Unterbrechung abgearbeitet werden, so dass im Basisrechner die Original-Kalibrierungssoftware sozusagen als Unterprogramm aufgerufen werden kann, die dann bereits beim Aufruf eine exakte Zuordnung zu dem zu kalibrierenden Bedienterminal erfährt. Es ist daher möglich, ein diesem Bedienterminal zugewiesenes Zeichen, bspw. eine fortlaufende Nummerierung, im Rahmen eines Parameters bei einem derartigen Unterprogrammaufruf mit zu übergeben. Ferner bietet dieses Merkmal die Möglichkeit, touch panels von unterschiedlichen Herstellern innerhalb eines gattungsgemäßen Computersystems integrieren zu können, wobei sodann vor Kalibrierung eines touch panels bereits dessen Typ bekannt ist und somit die genau zu diesem Typ passende Original-Kalibrierungssoftware geladen und aufgerufen werden kann.

Es liegt im Rahmen der Erfindung, dass während eines Kalibrierungsvorgangs ein benutzerseitiges Umschalten auf ein anderes Bedienterminal nicht möglich ist.

Hierdurch bleibt die 1:1-Zuordnung zu einem bestimmten Bedienterminal während der Kalibrierungsphase bestehen, und es ist daher ausgeschlossen, dass durch ein zwischenzeitliches Umschalten Verfälschungen hinsichtlich der zu bestimmenden Korrekturparameter ausgelöst werden könnten. Diese Betriebsart der eindeutigen Zuordnung zu einem zu kalibrierenden Bedienterminal kann bspw. dadurch bewirkt werden, dass vor dem Aufruf der Kalibrierungssoftware ein entsprechender Befehl an die Prioritätssteuerung der Peripherieschnittstelle geschickt wird, so dass diese bis zu einem entgegengesetzten Befehl nach Beendigung dieser Kalibrierungsphase keine Prioritätsumschaltung durchführt.

Erfindungsgemäß ist weiterhin vorgesehen, dass zur eindeutigen Zuordnung der Offset- oder sonstigen Korrekturparameter zu einem touch panel dem betreffenden Bedienterminal ein individuelles Zeichen zugeteilt wird, das die zuordenbaren Speicherzellen voneinander unterscheidet. Ein derartiges Identitätszeichen kann bspw. bereits bei der Konzeption des betreffenden Computersystems vergeben werden und muss anschließend stets beibehalten werden, damit die im Rahmen des Kalibrierungsverfahrens gefundenen Korrekturparameter stets dem richtigen touch panel zugeordnet werden. Es ist darauf zu achten, dass beim Austausch von touch panel-Bildschirmeinheiten einzelner Bedienterminals keine Verfälschungen auftreten. Wird beim Austausch von Terminals die Struktur des Computersystems gravierend verändert, d.h. nichtkalibrierte Terminals an mehreren Stellen eingesetzt, so ist es von Vorteil, eine Kalibrierung sämtlicher beteiligter touch panels durchzuführen.

Die Erfindung lässt sich dahingehend weiterbilden, dass das dem betreffenden Bedienterminal zugeteilte, individuelle Zeichen den Eingangssignalen dieses touch panels vor oder während der Datenübertragung zu dem Basisrechner hinzugefügt wird. Dieser zusätzliche Informationsgehalt kann von dem Basisrechner entschlüsselt werden, um Rückschlüsse über die aufzurufende Kalibrierungssoftware zu erhalten, um bei der Kalibrierung ermittelte Korrekturparameter an der jeweils zugeordneten Speicheradresse ablegen zu können und/oder um während der Kalibrierungsphase an das betreffende touch panel zu verschickende Steuerbefehle an das richtige Bedienterminal zu dirigieren.

Weitere Vorzüge ergeben sich dadurch, dass zur Steuerung des zu kalibrierenden touch panels eines Bedienterminals für dieses bestimmte Steuerbefehle durchgelassen, die Weiterleitung dieser Steuerbefehle an andere Bedienterminals jedoch unterdrückt wird. Durch das gezielte Ansprechen des zu kalibrierenden Terminals wird sichergestellt, dass an den nicht betroffenen Terminals keine undefinierten oder gar falschen Schaltzustände eintreten können, so dass die Betriebssicherheit des erfindungsgemäßen Computersystems weiter erhöht wird.

Die Erfindung erfährt eine vorteilhafte Ausgestaltung dadurch, dass das einem Bedienterminal zugeteilte Zeichen allen ausschließlich für dieses bestimmten Steuerbefehlen hinzugefügt wird. Derartige Steuerbefehle sind von denjenigen Ausgangssignalen des Basisrechners zu unterscheiden, welche für alle Bedienterminals gelten, so dass hier die Einführung eines Individualisierungszeichens nicht erforderlich ist.

Ein weiteres, erfindungsgemäßes Merkmal liegt darin, dass in den downlinkseitigen Signalpfaden Schaltfunktionen eingeschleift sind, welche je nach dem einem Steuerbefehl eingefügten Zeichen ein- oder ausgeschaltet werden. Diese Schaltfunktionen können entweder im Rahmen der Peripherieschnittstelle des Basisrechners realisiert sein, bspw. als Demultiplexer mit steuerbaren Ausgangsleitungen, sie können aber auch im Rahmen der Schnittstellen der Bedienterminals realisiert sein, wobei sodann ggf. eine selektive Unterdrückung von für das touch panel eines anderen Bedienterminals bestimmten Informationen vorgenommen werden kann, während für alle Bedienterminals, insbesondere deren Anzeigeeinrichtungen, gedachte Informationen an den betreffenden Schaltern vorbei geleitet werden können.

Es hat sich bewährt, dass in dem Basisrechner Informationen darüber abgespeichert werden, ob von einem Bedienterminal eintreffende touch panel-Koordinaten noch mit den durch die Kalibrierung ermittelten Offsetwerten korrigiert werden müssen. Da die Korrektur der touch panel-Eingabesignale auch von einer dem Basisrechner vorgeschalteten oder gar einer im Rahmen des Bedienterminals angeordneten Hardware-Baugruppe durchgeführt werden kann, sind ggf. die bei dem Basisrechner eintreffenden touch panel-Koordinaten schon korrigiert, so dass weitere Rechenaktivitäten nicht nur überflüssig sind, sondern sogar zu falschen Ergebnissen führen würden. Sofern daher bestimmte Bautypen von touch panels eine entsprechende, hardwaremäßige Koordinatenkorrektur begünstigen und das betreffende Computersystem von dieser Funktionalität Gebrauch macht, so muss der Basisrechner hiervon unterrichtet sein, damit er solchenfalls nicht eine zusätzliche Datenkorrektur durchführt. Je nach Aufbau des Computersystems kann hierbei die Verwendung unterschiedlicher Bautypen von Bedienterminals vorgesehen sein, so dass ggf. nur bei einzelnen Bedienterminals eine touch panel-Korrektur von dem Basisrechner durchgeführt wird, bei anderen Anlagen kann diese Funktionalität ggf. nur für alle Bedienterminals gleichzeitig getroffen werden, weshalb sich solchenfalls die Verwendung gleichartiger touch panels empfiehlt.

Eine vorteilhafte Anordnung lässt sich dadurch finden, dass die Bildschirm-Ansteuersignale von dem Basisrechner an alle Bedienterminals parallel versendet werden. Durch dieses Merkmal kann der vergleichsweise einfache Aufbau eines erfindungsgemäßen Computersystems weitgehend beibehalten werden. Dieses Merkmal ist zwar nicht zwingend für die Erfindung, sichert jedoch die Gleichwertigkeit aller Bedienungsterminals. In anderen Fällen können verschiedenen Anlagenkomponenten auch unterschiedliche Bildschirmoberflächen zugewiesen sein, so dass jeweils für die betreffende Anlagenkomponenente spezifische Informationen angezeigt werden und beeinflussbar sind. Dies kann auch dadurch erreicht werden, dass die unterschiedlichen Bildschirmdarstellungen nach den verschiedenen Bedienterminals nur unterschiedliche Teilausschnitte einer Gesamtdarstellung sind, so dass prinzipiell alle Bildschirmdarstellungen an allen Bedienterminals verfügbar sind und dort individuell ausgewählt werden können. Solchenfalls steht jedenfalls allen Bedienterminals
zu jedem Zeitpunkt exakt der selbe Informationsgehalt zur Verfügung.

Der Lösung des eingangs gestellten Problems dient ferner ein gattungsgemäßes Computersystem, wobei
a) wenigstens eines der Bedienterminals ein zu kalibrierendes touch panel zur Eingabe von Informationen aufweist, und wobei
b) im Rahmen der Peripherieschnittstelle des Basisrechners oder im Rahmen der Schnittstellen der Bedienterminals (je) eine Schaltung zur Identifizierung des Quellterminals einer eingehenden Eingabeinformation vorgesehen ist, welche zu einer eingehenden Eingabeinformation eine Identitätsinformation zu dem betreffenden Quellterminal erzeugt, die für die arithmetisch-logische Einheit des Basisrechners lesbar zur Verfügung gestellt wird.

Die Verwendung von kalibrierbaren touch panel-Eingabegeräten stellt gerade im Rahmen eines gattungsgemäßen Computersystems einen besonderen Fortschritt dar, da dieses vielfach zur Steuerung komplexer Anlagen mit unterschiedlichen Maschinen verwendet wird, bei welchen die unterschiedlichsten Parameter veränderbar sind. Oftmals wurden bisher für derartige Anwendungsfälle speziell für die betreffende Maschine angefertigte Folientastaturen verwendet, welche im allgemeinen nicht kompatibel miteinander sind, so dass bspw. bei der Eingabe allgemeiner Parameter der Anlage an jedem Bedienterminal andere Tasten zu betätigen wären. Dieser schwerwiegende Nachteil wird durch die Erfindung behoben, indem nunmehr die zu bedienenden Schaltflächen softwaremäßig erzeugt werden können, so dass es möglich ist, sämtliche, auch die individuellsten Schaltflächenanordnungen ohne hardwaremäßigen Zusatzaufwand an jedem Bedienterminal erzeugen zu können. Dies kann bspw. dadurch erfolgen, dass die gesamte Anlage betreffende Parameter in einem übergeordneten Menü spezifiziert oder geändert werden können, während für die einzelnen Anlagenteile Unterprogrammteile oder -menüs an jedem Bedienterminal aufgerufen werden können, wobei sodann die entsprechenden Schaltflächen auf den Bildschirmen generiert werden.

Dies wird dadurch möglich, dass eine Lösung erdacht wurde, um mit geringstem Aufwand die einzelnen touch panel-Eingabeeinrichtungen individuell kalibrieren zu können, wodurch die strukturelle Lücke zwischen der Anzeigeeinrichtung eines Bedienterminals und dessen darauf applizierten touch panels geschlossen wird. Erst dadurch wird dem betreffenden touch panel eine hinreichende Genauigkeit erteilt, so dass durch den Fingerdruck einer Bedienperson ausgelöste Koordinatensignale exakt einer aktuellen Schaltfläche zugeordnet werden können. Dies wird erreicht, indem für die Verarbeitung der von einem touch panel stammenden Eingangssignale zusätzliche Informationen über das betreffende Bedienterminal generiert werden, wodurch der Basisrechner in die Lage versetzt wird, terminalspezifische Korrekturparameter zu berechnen, abzuspeichern, aufzurufen und/oder zur Korrektur zu verwenden. Indem die hierbei benötigte Identitätsinformation im Rahmen einer Schnittstelle zwischen dem Basisrechner und den Bedienterminals erzeugt wird, können für die Hardware des Basisrechners und der terminalseitigen Ein- und Ausgabegeräte Standardbaugruppen ohne jegliche Veränderung verwendet werden, und im Idealfall kann auch auf dem Basisrechner bspw. zur Kalibrierung eine von dem touch panel-Hersteller mitgelieferte Kalibrierungssoftware Verwendung finden. Sofern weiterhin eine softwaremäßig beeinflussbare Zuordnung der Identitätsinformationen zu verschiedenen Bedienterminals vorgesehen ist, kann darüber hinaus die Schnittstellen-Hardware sowohl für die Peripherieschnittstelle des Basisrechners wie auch für die Terminal-Schnittstellen standardisiert werden, so dass der zusätzliche Aufwand auf die einmalige Entwicklung geeigneter Hardwarestrukturen beschränkt ist. Unter softwaremäßiger Veränderung von Identitätsinformationen soll bspw. auch verstanden werden, dass im Rahmen der Terminal-Schnittstellen je ein auf einer Platine montierbarer Mehrschachfalter (sog. DIP-Schalter) vorgesehen ist, an welchem mittels eines Dualcodes die Kennziffer des betreffenden Bedienterminals einstellbar ist.

Die erfindungsgemäße Funktionalität lässt sich dadurch erreichen, dass im Rahmen der Schnittstelle eines Bedienterminals ein Identitätszeichengenerator vorgesehen ist, der ein terminalspezifisches Identitätszeichen erzeugt und der an den Basisrechner zu übertragenden Information voranstellt, an- oder einfügt. Da eine Terminal-Schnittstelle im Rahmen eines gattungsgemäßen Computersystems eine Art Informationsknoten darstellt, wo die von dem Basisrechner eintreffenden Informationen empfangen und weitergeleitet werden, während die von den ggf. unterschiedlichen Eingabegeräten eingehenden Signale zusammengefasst und nach Art eines Multiplexsystems über einen gemeinsamen Kanal an den Basisrechner übertragen werden, ist hier ohnehin eine gewisse Intelligenz erforderlich, um die verschiedenen Aktivitäten miteinander zu koordinieren. Daher bereitet es keinen erheblichen Aufwand, für eine entsprechende, intelligente Baugruppe eine zusätzliche Information über das Identitätszeichen des betreffenden Bedienterminals bereit zu halten, wie bspw. unter einer adressierbaren Speicher- oder Peripherieadresse, welche daher jederzeit ausgelesen und vor oder während der Übertragung eines Telegramms an den Basisrechner an geeigneter Stelle in den seriellen Datenstrom eingebunden werden kann. Im einfachsten Fall genügt hierfür bereits ein Parallel-Seriell-Wandler in Form eines parallel beschreibbaren und seriell auslesbaren Schieberegisters, wobei die Information von dem betreffenden Eingabegerät an einem ersten Bereich der Parallelschnittstelle dieses Schieberegisters und die terminalspezifische Identitätsinformation an einem anderen Bereich der Parallel- Schnittstelle dieses Schieberegisters angelegt wird.

Die Erfindung bietet ferner die Möglichkeit, dass im Rahmen der Peripherieschnittstelle jedem Eingangssignalpfad ein Halteglied, bspw. ein RS-Flip-Flop, parallelgeschalten ist, um den Eingang eines Signals auf dem betreffenden Eingangssignalpfad zu kennzeichnen. Der weiter oben beschriebene, innerhalb der Terminal-Schnittstellen angeordnete Identitätszeichengenerator ist zwar mit wenig Aufwand realisierbar, erfordert jedoch beim Aufbau eines entsprechenden Computersystems nach wie vor eine Programmierung, wobei genau darauf zu achten ist, dass bei der Zuordnung der Identitätsinformationen kein Fehler unterläuft. Diese Fehlerquelle kann ausgeschaltet werden, wenn der Identitätszeichengenerator in der Peripherieschnittstelle des Basisrechners angeordnet wird, derart, dass jedem der sternförmig an dieser Stelle zusammenlaufenden Ein-/Ausgänge zu den unterschiedlichen Bedienterminals je ein Signalpfad zugewiesen ist, wobei Eingangssignale auf den Eingangsanschlüssen ausgewertet werden, um automatisch und zuverlässig ein für diesen Schnittstelleneingang charakteristisches Zeichen zu generieren und sodann bei der Weiterübertragung der eingehenden Information an den Basisrechner einzufügen. Vorzugsweise ist jedem Eingangssignalpfad ein seriell beschreibbares und parallel auslesbares Schieberegister zum Empfang der eingehenden Informationen zugeordnet. Im Rahmen der Übertragung eines parallelen Datenwortes kann durch Anfügen weiterer, für den betreffenden Eingangssignalpfad charakteristischer Identitätsbits eine Ergänzung der Information mit einer dauernden spezifischen Information vorgenommen werden. Hierbei ist keinerlei Programmierung erforderlich, da die zusätzlichen Identitätsbits bspw. einer fortlaufenden Nummerierung der Eingangssignalpfade in dualer Kodierung entsprechen kann, welche durch eine hardwaremäßige Verdrahtung der entsprechenden Bits mit den jeweiligen Werten entsprechenden High- und Low-Pegeln vorgenommen werden kann. Sofern durch eine entsprechende Prioritätssteuerung die Eingangssignale von den unterschiedlichen Bedienterminals zeitlich koordiniert werden, kann im Rahmen eines gattungsgemäßen Computersystems der hardwaremäßige Aufwand der Peripherieschnittstelle des Basisrechners weiter reduziert werden, indem für alle eingehenden Terminalsignale ein gemeinsames Schieberegister vorgesehen ist, welches die eingehenden Signale unabhängig von deren Quelle in ein paralleles Datenformat wandelt. Solchenfalls kann ein Identitätszeichen durch Scannen des aktiven Eingangs der Peripherieschnittstelle erfolgen. Hierzu dienen die an die individuellen Eingänge angekoppelten Halteglieder, welche bei inaktivem Dateneingang bspw. auf low gesetzt bleiben und bei einem Dateneingang sofort auf high gesetzt werden und in diesem Zustand verharren, bis sie von einer intelligenten Baugruppe der Peripherieschnittstelle zurückgesetzt werden.

Eine weitere Optimierung lässt sich dadurch erreichen, dass an jeden Eingangssignalpfad, insbesondere an ein mit diesem gekoppeltes Halteglied, ein Eingangsbit einer Baugruppe zur Generierung eines Identitätssignals angekoppelt ist. Zwar könnte das bei einer Datenübertragung aktivierte Halteglied durch serielles Abtasten sämtlicher Halteglieder gefunden werden, was jedoch ggf. mit einer zeitlichen Verzögerung verbunden sein kann. Deshalb wird das Identitätssignal mit einem hardwaremäßig verdrahteten Logikschaltkreis aus den unterschiedlichen Ausgangssignalen der verschiedenen Halteglieder asynchron erzeugt und kann sofort für die weitere Verarbeitung unter einer geeigneten Adresse bereit gehalten werden.

Der Erfindungsgedanke erlaubt eine Weiterbildung dahingehend, dass die Identifizierungsbaugruppe als Prioritäts-Decoder aufgebaut ist, um die 1-aus-n-Information an ihrem Eingang in eine Dualzahl umzuwandeln, die als Identitätsinformation über das betreffende Quellterminal verwendet wird. Diese Vorgehensweise entspricht einer erheblichen Datenkompression, weil bspw. paarweise unterschiedliche Identitätszeichen für bis zu 16 Bedienterminals mit einer nur 4-stelligen Dualzahl dargestellt werden können.

Die Erfindung lässt sich dadurch ergänzen, dass der Ausgang der Identifizierungsbaugruppe mit einem Schieberegister gekoppelt ist, so dass eine Parallel-Serien-Wandlung möglich ist, und dass die serielle Identitätsinformation an einen weiteren Eingang eines Multiplexbausteins gelangt, an dem die verschiedenen Eingangssignalpfade zusammengeführt sind. Sofern die eigentliche Wandlung in ein paralleles Datenformat erst in dem Basisrechner selbst erfolgt und dieser demnach seriell mit der Peripherieschnittstelle gekoppelt ist, so muss das zunächst in paralleler Form vorliegende Identifikationszeichen dem seriellen Datenfluss hinzugefügt werden. Ein Schieberegister kann hierbei die Parallel-Serien-Wandlung übernehmen, und die Einschleusung in die zu dem Basisrechnung führende Datenleitung kann über einen weiteren Anschluss des Multiplexbausteins erfolgen, so dass der zusätzliche Hardwareaufwand minimal ist.

Zur Perfektionierung der erfindungsgemäßen Konstruktion kann vorgesehen sein, dass die Identitätsinformation über weitere Datenleitungen parallel zu dem ggf. ebenfalls parallel gewandelten Eingangssignal von den zusammengeführten Eingangssignalpfaden zu dem Basisrechner übertragen wird. Sofern die Kommunikation mit dem Basisrechner in einem parallelen Datenformat erfolgt, kann die Identitätsinformation, die ursprünglich ohnehin in parallelem Format erzeugt wird, in diesem Stadium der Signalverarbeitung beigefügt werden, so dass hiermit kein Zeitverlust verbunden ist.

Bevorzugt wird die Identitätsinformation ggf. zusammen mit dem betreffenden Eingangssignal unter einer vordefinierten Speicheradresse hinterlegt, auf welche der Basisrechner zugreifen kann (bspw. in einem nach dem FIFO-Prinzip organisierten Speicherbereich). Dieser Speicherbereich kann sich noch im Rahmen der Peripheriebaugruppe befinden, jedoch kann im Fall einer parallelen Ankopplung an den Basisrechner oftmals nur eine fließende Grenze zwischen diesen Komponenten gezogen werden, da sich bei paralleler Ankoppelung die Peripherieschnittstelle wie ein adressierbarer Speicherplatz verhält. Aufgrund des FIFO-Prinzips ist sichergestellt, dass die Eingangssignale in der zeitlichen Reihenfolge ihres Eingangs von dem Basisrechner verarbeitet werden.

Mit großem Vorteil wird bei Eingang eines Informationssignals ein Software-Interrupt ausgelöst, der dem Basisrechner den Informationseingang anzeigt. Hierbei genügt ein einziger Software-Interrupt, der nur dann ausgelöst wird, wenn im Rahmen der Peripherieschnittstelle ein oder mehrere von dem Basisrechner einlesbare Informationen vorhanden sind. Bei Eingang mehrfacher Informationen kann der Basisrechner bei Abarbeitung des Software-Interrupts selbst feststellen, wie viele Informationen für ihn bereit liegen.

Die Erfindung empfiehlt, dass ein Ausgang der Identifizierungsbaugruppe mit dem Rücksetzeingang des Halteglieds gekoppelt ist, um dieses nach Erzeugung der Identitätsinformation zurückzusetzen. Dadurch ist gewährleistet, dass jeweils nur die auf den aktuellsten Signaleingang bezogenen Identitätsinformationen erzeugt und bereitgehalten werden.

Die Effektivität der Erfindung kann weiterhin dadurch gesteigert werden, dass der Basisrechner über eine erste Steuermöglichkeit verfügt, um Ausgangssignale gleichzeitig an alle Bedienterminals zu versenden, und über eine zweite Steuermöglichkeit, um Ausgangssignale selektiv an ein bestimmtes Bedienterminal zu adressieren, so dass die übrigen Bedienterminals die betreffenden Ausgangssignale nicht erhalten oder nicht auswerten. Die von der weiter oben beschriebene Struktur des erfindungsgemäßen Computersystems erzeugte Identitätsinformation gelangt zu dem Basisrechner und kann von diesem im Rahmen eines Kalibrierungsdurchlaufs für ein touch panel dazu verwendet werden, um ausschließlich mit diesem zu kommunizieren und steuernd auf dasselbe einzuwirken. Bspw. kann im Rahmen einer hardwaremäßig realisierten Ansteuer- und Auswertebaugruppe für das betreffende touch panel bereits eine Korrektur der Ausgangssignale vorgenommen werden. Die hierzu erforderlichen Informationen über die dabei zu verwendenden Korrekturparameter können selektiv an das betreffende touch panel bzw. dessen Auswertebaugruppe verschickt werden, oder dieses kann zur selbständigen Generierung von Korrekturparametern aufgefordert werden. Erfindungsgemäß erfolgt dies dadurch, dass die Schnittstellen des Computersystems von dem Basisrechner veranlasst werden, bei einem derartigen, selektiven, downlinkseitigen Signal ausschließlich einen einzigen Signalpfad zu dem betreffenden Bedienterminal bzw. zu dessen touch panel-Auswerteeinheit zu öffnen, andere downlinkseitige Datenrichtungen jedoch zu unterbrechen. Andererseits ist auch ein voll parallel geschalteter Betrieb möglich, der insbesondere zum parallelen Ansteuern aller Anzeigeeinrichtungen sämtlicher Bedienterminals verwendet werden kann.

Weitere Vorteile bringt eine Einrichtung in dem Basisrechner mit sich, die individuellen Ausgangssignalen desselben eine Identitäts- oder Adressierungsinformation über das Zielterminal dieses Ausgangssignals voranstellt, ein- oder anfügt. Diese Maßnahme hat den Vorteil, dass keinerlei zusätzliche Steuerleitungen von dem Basisrechner zu der Peripherieschnittstelle verlegt werden müssen, vielmehr kann diese durch Scannen des Informationsinhaltes der von dem Basisrechner empfangenen Daten erkennen, ob sie bis auf einen Datenpfad alle anderen, downlinkseitigen Signalpfade unterbrechen soll, oder ob sie alle downlinkseitigen Datenpfade öffnen soll, um bspw. ein Bildsteuersignal zu allen Bedienterminals zu schicken.

Ferner ist es möglich, dass in einer Schnittstelleneinheit des Basisrechners und/oder der Bedienterminals ein die Identitäts- oder Adressierungsinformation auswertender Baustein vorgesehen ist. Die Aufgabe dieses Bausteins besteht darin, einzelne Bits einer Informationssequenz herauszufiltern und die Information über das Zielterminal für die weitere Steuerung des Datenflusses bereit zu stellen. Um hier eine möglichst geringe Signalverzögerung zu erreichen, ist es vorteilhaft, wenn die entsprechende Identitätsinformation am Anfang einer Datensequenz enthalten ist, so dass sofort nach Empfang der betreffenden Bits mit der Auswertung begonnen und sodann mit geringster Verzögerung die sich anschließende Datensequenz weitergeleitet werden kann.

Bei einer ersten Ausführungsform kann in der Peripherieschnittstelle des Basisrechners ein Demultiplexer vorgesehen sein, der das individuelle Ausgangssignal ausschließlich an das durch die Identitäts- oder Adressierungsinformation bezeichnete Bedienterminal weiterleitet. Hiermit wird ein überflüssiger Datenverkehr zu den unbeteiligten Bedienterminals und damit eine weiter Fehlerquelle vermieden. Ferner muss die Freischaltung der Signalpfade ohnehin an dieser Stelle stattfinden, wenn auch die Identitätsinformationen an dieser Stelle erzeugt wurde, da solchen falls den einzelnen Bedienungsterminals ihr jeweiliges Identitätszeichen überhaupt nicht bekannt ist.

Eine alternative Ausführungsform zeichnet sich dadurch aus, dass in der Schnittstelle eines Bedienterminals ein Schalter vorgesehen ist, dessen Stellung (EIN/AUS) über die Weiterleitung von dem Basisrechner empfangener Ausgangssignale entscheidet. Es handelt sich hierbei eigentlich um elektrisch steuerbare Schalter wie bspw. Relais, Transistoren o. dgl., und deren Steuereingang ist über einen Komparator mit dem die Identitäts- oder Adressierungsinformationen auswertenden Baustein gekoppelt, derart, dass in dem Komparator ein Vergleich der empfangenen Adressinformation mit dem in dem betreffenden Bedienterminal abgespeicherten Identitätszeichen vorgenommen und ausschließlich bei Gleichheit der betreffende Schalter geöffnet wird.

Die Ansteuerung des Schalters in der Schnittstelle eines Bedienterminals kann derart erfolgen, dass dieser dann eingeschaltet wird, wenn ein empfangenes Ausgangssignal des Basisrechners eine Identitäts- oder Adressierungsinformation enthält, die dem betreffenden Bedienterminal oder allen Bedienterminals zugeordnet ist. Neben der weiter oben beschriebenen Methode, der selektiv weiterzuleitenden Information die Identität des Zielterminals direkt beizupacken, kann die Zielinformation auch vorab in einem getrennten Steuerbefehl gesendet werden, der sodann ausschließlich den gewünschten Signalpfad öffnet. Dadurch kann bspw. für die Dauer einer Kalibrierung ein selektiver Signalpfad zu dem betreffenden Bedienterminal gelegt werden, während alle anderen erst nach Absendung eines weiteren Steuersignals wieder freigeschalten werden.

Eine andere Möglichkeit zur Ansteuerung des Schalters in der Schnittstelle eines Bedienterminals liegt darin, diesen bei Empfang eines festgelegten, terminalspezifischen Steuersignals des Basisrechners einzuschalten und ggf. bei Empfang eines weiteren Steuersignals ausschalten.

Um die Kalibrierung eines touch panels selektiv vornehmen zu können, sollte in der Schnittstelle eines Bedienterminals ein downlinkseitiger Anschluss zu einer Steuer- und/oder Auswertebaugruppe für das betreffende touch panel vorgesehen sein. Während demnach bisher für die Kommunikation mit dem downlinkseitig zu der Terminal-Schnittstelle angeordneten Geräten nur ein einziger Anschluss mit Ausgangsfunktion vorgesehen sein musste, nämlich zum Weiterleiten der Informationen für die Anzeigeeinrichtung, so ist nun mindestens auch ein weiterer Anschluss für das touch panel vorgesehen, der ebenfalls die Funktionalität eines Datenausgangs hat, um eine bidirektionale Kommunikation zwischen dem Basisrechner und dem der Steuer- und/oder Auswertebaugruppe der touch panels zu ermöglichen.

Sofern die Kalibrierung eines touch panels einen zusätzlichen Informationsfluss von dem Basisrechner zu dem betreffenden Bedienterminal erfordert, bspw. zum Abspeichern der gefundenen Offsetparameter, sollte in der Schnittstelle eines Bedienterminals ein Demultiplexer mit Weichenfunktion vorgesehen sein, der die von dem Basisrechner empfangenen Ausgangssignale an das jeweils angesprochenen Datenein- und/oder - ausgabegerät (Anzeigeeinheit, touch panel, etc.) selektiv verteilt. Im Gegensatz zu bisher verbreiteten, gattungsgemäßen Computersystemen ohne touch panel, wo der downlinkseitige Datenfluss ausschließlich zu der Anzeigeeinrichtung weiterzuleiten war, ist im Rahmen einer erfindungsgemäßen Terminal-Schnittstelle mindestens ein weiterer Ausgang für das touch panel vorgesehen, und die betreffende Schnittstelle muss dann auch eine Weichenfunktion übernehmen, um die Signale gerätespezifisch weiterzuleiten. Hierzu ist eine Erkennung des die Daten empfangenden Gerätes aus der von dem Basisrechner stammenden Information erforderlich, was durch Abfrage charakteristischer Bits einer Datensequenz erfolgen kann.

Schließlich entspricht es der Lehre der Erfindung, dass der Schalter in der Schnittstelle eines Bedienterminals dem Demultiplexer und dem betreffenden Datenein- und/oder -ausgabegerät angeordnet ist, so dass bspw. die Weiterleitung von Steuerbefehlen für das touch panel selektiv unterdrückt werden kann, während gleichzeitig Steuerbefehle für die Anzeigeeinheit weitergeleitet werden. Durch diese Maßnahme wird zunächst der gesamte, die Anzeigeeinrichtungen betreffende Datenverkehr nach Erkennung des Zielgerätes von den Terminal-Schnittstellen automatisch weitergeleitet, und ausschließlich bei den sonstigen Zielgeräten, insbesondere touch panels, findet eine weitere Selektion daraufhin statt, ob die betreffende Information wirklich dem betreffenden Bedienterminal zugewiesen ist. Diese Maßnahme hat den Vorteil, dass die für die Anzeigeeinrichtung gedachten Informationen keinerlei zusätzliche, terminalspezifische Abfrage durchlaufen müssen, so dass diese Kommunikation nicht verzögert ablaufen muss, während dennoch sichergestellt ist, dass die vergleichsweise selten auftretenden Steuersignale für die übrigen Peripheriegeräte, insbesondere touch panels, jeweils exakt zu genau dem vorab spezifizierten Zielgerät gelangen.

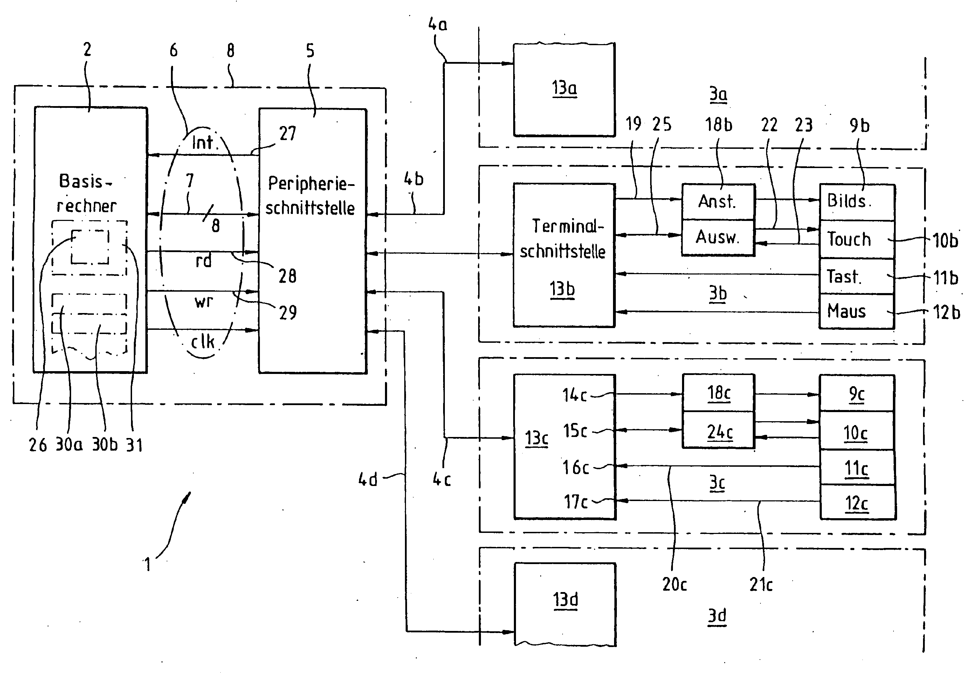

Weitere Merkmale, Einzelheiten, Vorteile und Wirkungen der Erfindung ergeben sich aus der folgenden Beschreibung einer bevorzugten Ausführungsform der Erfindung sowie anhand der Zeichnung. Hierbei zeigt die einzige Figur ein Blockschaltbild eines erfindungsgemäßen Computersystems.

Den Kern des erfindungsgemäßen Computersystems 1 bildet ein Basisrechner 2, wobei es sich bspw. um einen sog. Industrie-PC handeln kann. Der Basisrechner 2 steuert und/oder überwacht eine technische Anlage. Da sich diese Anlage über einen größeren Raumbereich erstreckt, bspw. sämtliche entlang einer gemeinsamen Transportvorrichtung aufgestellten Maschinen umfasst, sind zur Kommunikation mit dem Bedien- und/oder Wartungspersonal mehrere, an verschiedenen Orten aufgestellte Bedienterminals 3 vorgesehen. Diese Bedienterminals 3 sind über individuelle Übertragungskanäle 4 mit dem Basisrechner 2 gekoppelt. Zu diesem Zweck sind die Übertragungskanäle 4 an einer Peripherieschnittstelle 5 sternförmig zusammengeführt. Diese Peripherieschnittstelle 5 kommuniziert sodann über einen gemeinsamen Übertragungskanal 6 mit dem Basisrechner 2. Sofern es sich wie in dem dargestellten Beispiel bei dem Übertragungskanal 6 um eine Parallelschnittstelle handelt, die mehrere, parallele Datenleitungen 7 umfasst, kann die Peripherieschnittstelle 5 direkt an einen internen Datenbus des Basisrechners 2 angeschlossen sein. In diesem Falle kann die Peripherieschnittstelle 5 u. a. auch als Steckkarte ausgebildet sein, die in einen freien Steckplatz des Basisrechners 2 eingesteckt ist. Auf jeden Fall kann die Peripherieschnittstelle 5 zusammen mit dem Basisrechner 2 in einem gemeinsamen Gehäuse 8 untergebracht sein.

Demgegenüber können die Übertragungskanäle 4 je nach den örtlichen Voraussetzungen als Drahtverbindungen realisiert sein; sofern eine Entfernung von bspw. 15 m zwischen einem Bedienterminal 3 und dem Basisrechner 2 überschritten wird, ist auch eine Anbindung über Lichtwellenleiter oder Funk möglich. Während bei einer galvanischen Kopplung über Drahtverbindungen auch eine Parallelschnittstelle realisiert werden kann, empfiehlt sich bei Verwendung von Lichtwellenleitern oder Funk eine serielle Datenübertragung.

Jedes Bedienterminal 3 verfügt über einen Bildschirm 9, der nach irgendeinem gängigen, physikalischen Prinzip betrieben werden kann, vorzugsweise jedoch als Flüssigkristall-Anzeige ausgebildet ist. Auf der Frontseite des Bildschirms 9 ist eine berührungssensitive Fläche 10 ("touch panel") befestigt. Ferner können im Rahmen der Bedienterminals 3 je eine Tastatur 11 und eine Maus 12 vorgesehen sein. Zur Koordination der Kommunikation zwischen den Ein- und Ausgabegeräten 9 - 12 der Bedienterminals 3 und dem Basisrechner 2 ist in jedem Bedienterminal 3 eine Terminalschnittstelle 13 vorgesehen, die einerseits an den betreffenden Übertragungskanal 4 angeschlossen ist und andererseits für jedes der Ein- und/oder Ausgabegeräte 9 - 12 einen Anschluss 14 - 17 aufweist. Hierbei kann der dem Bildschirm 9 zugeordnete Anschluss 14 als Ausgang konzipiert sein, um für den Bildschirm 9 bestimmte Steuersignale 4 des Basisrechners 2 an eine dem Bildschirm 9 vorgeschaltete Ansteuerbaugruppe 18 zu übertragen 19. Andererseits sind die der Tastatur 11 und der Maus 12 zugeordneten Anschlüsse 16, 17 als Eingänge ausgelegt, um die Eingabesignale 20, 21 von diesen Geräten 11, 12 empfangen und sodann ggf. nach einer Aufbereitung an die Peripherieschnittstelle 5 des Basisrechners 2 übertragen 4 zu können.

Wie eingangs beschrieben, ist eine berührungssensitive Fläche 10 mit zwei leitfähigen, jedoch widerstandsbehafteten Folien aufgebaut, wobei durch eine Berührung ein punktueller Kontakt zwischen den beiden Folien hergestellt wird. Durch wechselweise Beaufschlagung 22 jeweils einer dieser Folien mit einer Spannung und durch Messung der durch die in dem Berührungspunkt abgegriffene Spannung gekennzeichneten Ausgangsspannung 23 der jeweils anderen Folie kann eine x- bzw. y-Koordinate gemessen werden. Die Ansteuerung dieser Folien wie auch die Auswertung der Messergebnisse wird in einer Ansteuerungs- und Auswertebaugruppe 24 vorgenommen, welche die gemessenen Analogspannungen 24 in Digitalwerte wandelt, ggf. speichert und vorzugsweise in seriellem Datenformat an die betreffende Terminalschnittstelle 13 überträgt 25.

Während dieses Normal- oder Standardbetriebs, der dadurch ausgezeichnet ist, dass der Datenfluss von der der berührungssensitiven Fläche 10 zugeordneten Ansteuerungs- und Auswertebaugruppe 24 ausschließlich in Richtung zu der betreffenden Terminalschnittstelle 13 und von dort weiter über die Peripherieschnittstelle 5 zu dem Basisrechner 2 fließt, gibt es noch eine Kalibrierungsbetriebsart, bei der Korrekturwerte berechnet werden, um bspw. Verschiebungen zwischen einem Bildschirm 9 und dem betreffenden touch panel 10 zu kompensieren. Da im Rahmen einer derartigen Kalibrierung eine spezielle Ansteuerung des zugeordneten Bildschirms 9 erfolgen muss, wobei einer Bedienungsperson bspw. durch Fadenkreuze markierte Berührungspunkte vorgegeben werden, und gleichzeitig eine Auswertung der hierbei eingelesenen Werte des zugeordneten touch panels 10 erfolgen muss, wird hierfür zumeist von dem Hersteller der betreffenden, berührungssensitiven Folie 10 ein Kalibrierungsprogramm 26 mitgeliefert, das auf nahezu allen Standard-PCs und somit auch auf dem erfindungsgemäßen Basisrechner 2 lauffähig ist. Diese Kalibrierungssoftware 26 wird jedoch nur für die Standardkonfiguration einer Computeranlage mit einem Bildschirm und einer berührungssensitiven Folie geliefert und ist daher nicht in der Lage, die verschiedenen Folien 10 des erfindungsgemäßen Computersystems 1 zu bedienen. Deshalb wird im Rahmen der Erfindung eine Struktur geschaffen, mit der nicht nur der Basisrechner 2 und die Ein- und Ausgabegeräte 9 - 12 samt deren Ansteuerschaltungen 18, 24, sondern auch die mit den berührungssensitiven Folien 10 mitgelieferten Kalibrierungsprogramme 26 ohne Modifikationen genutzt werden können.

Die erfindungsgemäße Struktur umfasst eine modifizierte Hardware, die im folgenden ausführlicher beschrieben wird, sowie eine übergeordnete Kalibrierungssoftware 31, welche die Schnittstelle zwischen einer individuellen Kalibrierungsanforderung, der durch die zusätzlichen Bedienterminals 3 ergänzten Hardware und wenigstens einem von einem touch panel-Hersteller gelieferten Kalibrierungsprogramm 26 bildet. Hierbei ist bei einer einfachen Ausführungsform im Rahmen einer Terminalschnittstelle 13 ein Identitätszeichengenerator vorgesehen, der dem uplinkseitig gerichteten Datenfluss 25 von dem angeschlossenen touch panel 10 eine bspw. an einem DIP-Schalter einstellbare Kennziffer hinzufügt und die solchermaßen ergänzte Information sodann an die Peripherieschnittstelle 5 überträgt 4. Nach vollständigem Empfang der betreffenden Information 4 wird der Basisrechner 2 von der Peripherieschnittstelle 5 über einen Software-Interrupt 27 informiert. In Abarbeitung des betreffenden Unterprogramms wird sodann die eingegangene Information durch eine geeignete Steuerung 28 der Peripherieschnittstelle 5 ausgelesen.

Sofern ein entsprechend durch ein Identitätszeichen ergänzter Befehl von der Tastatur 11 oder Maus 12 des betreffenden Bedienterminals 3 empfangen wurde, der den Basisrechner 2 zur Kalibrierung der betreffenden, berührungssensitiven Folie 10 auffordert, so wird das übergeordnete Kalibrierungsprogramm 31 aufgerufen; daraufhin sendet der Basisrechner 2 zunächst einen Steuerbefehl aus 29, der von der Peripherieschnittstelle 5 an alle Terminalschnittstellen 13 übertragen 4 wird. Dieser Befehl enthält das Identitätszeichen, welches soeben von dem aktiven Bedienterminal 3b empfangen wurde, und weist die Terminalschnittstellen 13 der übrigen Bedienterminals 3a, 3c, 3d an, die downlinkseitige Datenübertragung zu den jeweils nachgeschalteten Auswertebaugruppen 24 für die angeschlossenen touch panels 10 zu unterbrechen.

Wenn diese Auftrennung in den Terminalschnittstellen 13 an dem sekundärseitigen Ausgang einer Datenweiche (Demultiplexer) erfolgt, welche Ansteuersignale für die Steuerung 24 eines touch panels 10 von den Ansteuersignalen 19 für den Bildschirm 9 unterscheidet, so ist sichergestellt, dass auf allen übrigen Bedienterminals 3a, 3c, 3d nach wie vor das jeweils aktuelle Bild zu sehen 9 ist. Ferner kann außerdem die Dateneingabe von den nicht beteiligten Bedienterminals 3 unterbrochen werden. Demnach ist nun eine eindeutige Beziehung zwischen dem Basisrechner 2 und dem aktiven Bedienterminal 3b hergestellt worden.

Daraufhin kann von der übergeordneten Kalibrierungssoftware 31 in dem Basisrechner 2 nun das spezifische Kalibrierungsprogramm 26 des touch panel-Herstellers aufgerufen werden. Dieses kommuniziert nun mit dem Bildschirm 9b und dem touch panel 10b des aktiven Bedienterminals 3b, während an den anderen Bedienterminals 3a, 3c, 3d zwar das aktuelle Bild zu sehen ist, jedoch eine Dateneingabe vorübergehend unmöglich ist. Das Kalibrierungsprogramm 26 berechnet nun durch Interaktion mit dem aktiven Bildschirm 9b und touch panel 10b individuelle Korrekturparameter für dieses panel 10b.

Je nach Bautyp der Ansteuerungs- und Auswertebaugruppe 24b werden diese Korrekturparameter entweder in dem Basisrechner 2 oder in der Ansteuerungs- und Auswertebaugruppe 24 gespeichert, um sodann für eine Korrektur der Koordinaten während des betreffenden touch panels 10b im Rahmen des folgenden Normalbetriebs zur Verfügung zu stehen. Hierbei bereitet es überhaupt keine Schwierigkeiten, die betreffenden Daten genau zu der ausgewählten Ansteuerungsbaugruppe 24 für den aktiven touch panel 10b zu übertragen, da alle anderen Terminalschnittstellen 13a, 13c, 13d eine downlinkseitige Informationsübertragung mit Ausnahme zu dem betreffenden Bildschirm 9 unterbinden. Die von der Kalibrierungssoftware 26 bestimmten Korrekturparameter können somit geradewegs auf die aktive touch panel-Ansteuerbaugruppe 24 übertragen 25 werden.

In dem anderen Fall, wo eine standardmäßige Abspeicherung der Korrekturparameter im Rahmen des Basisrechners 2 erfolgt, wird die Kalibrierung 26 ohne eine individuelle Abspeicherung der Korrekturparameter zu Ende geführt. Sodann springt der Basisrechner 2 zu der dem Aufruf des Kalibrierungsprogramms 26 folgenden Befehlszeile der übergeordneten Kalibrierungssoftware 31 zurück. Ist dies geschehen, so versendet der Basisrechner 2 in Abarbeitung der übergeordneten Kalibrierungssoftware 31 einen weiteren Steuerbefehl an sämtliche Terminalschnittstellen, worin deren Unterbrechung aufgehoben wird, so dass nun wieder eine prioritätsgesteuerte Kommunikation mit sämtlichen Bedienterminals 3 möglich ist.

Sofern die Abspeicherung der Korrekturparameter nicht individuell in den Steuerbaugruppen 24 für die betreffenden touch panels 10 erfolgt ist, so müssen durch einen weiteren Befehl die von dem Kalibrierungsprogramm 26 an zentraler Stelle abgelegten, aktuellen Korrekturparameter von der übergeordneten Kalibrierungssoftware 31 in einen dem aktuellen Bedienterminal 3b individuell zugeordneten Speicherbereich 30b übertragen werden, wo sie sodann erhalten bleiben, selbst wenn für eine nachfolgende Kalibrierung eines anderen Bedienterminals 3c die bisherigen Korrekturwerte in dem zentralen Speicher wieder überschrieben werden.

Im letzteren Fall obliegt es darüber hinaus dem Basisrechner 2, bei einem Eingangssignal von einem touch panel 10 die diesem zugeordneten Korrekturwerte aus der betreffenden Speicheradresse 30 auszulesen und durch eine Verrechnung mit den eingegangenen Werten die auf die Schaltflächen des Bildschirms 9 bezogenen Druckpunkt-Koordinaten bestimmen zu können, um sodann die von dem Bedienungspersonal angeforderte Schaltfunktion bestimmen und ausführen zu können.

Demgegenüber ist es im ersteren Fall, wo eine Korrektur bereits in der Steuerungsbaugruppe 24 erfolgt, nicht erforderlich, dass der Basisrechner 2 eine entsprechende Korrektur vornimmt. Dies kann dem Basisrechner 2 bspw. dadurch mitgeteilt werden, dass an der betreffenden Speicherstelle 30 sich die Dualzahl "0" oder ein anderer, charakteristischer Wert findet, weil im Anschluss an die Kalibrierung keine Übertragung der Korrekturparameter in den Speicherbereich 30 stattgefunden hat. Eine Steuerung des Basisrechners 2 derart, dass im Anschluss an eine Kalibrierung keine Eintragung in die Speicherbereiche 30 erfolgt, kann bspw. anhand einer in dem Basisrechner 2 hinterlegten Tabelle vorgenommen werden, wo für jedes Bedienterminal oder für alle Terminals gemeinsam eine Information darüber zu finden ist, wo die touch panel-Korrekturparameter zu hinterlegen sind.

## Patentansprüche

1. Verfahren zum Betrieb eines Computersystems (1), welches einen Basisrechner (2) mit einer arithmetisch-logischen Einheit und mehrere Bedienterminals (3) mit Dateneingabe- und -ausgabemöglichkeiten (9 - 12) umfasst, wobei im Rahmen jedes Bedienterminals (3) zur Datenausgabe wenigstens ein Bildschirm (9) und zur Dateneingabe wenigstens jeweils eine auf den betreffenden Bildschirm (9) oder eine davor angeordnete, transparente Platte applizierte, berührungssensitive Fläche, insbesondere Folie (10), vorgesehen ist, und wobei die von den Bedienterminals (3) zu dem Basisrechner (2) gerichteten Signalpfade (4) an einer Peripherieschnittstelle (5) im Bereich (8) des Basisrechners (2) zusammengeführt sind,
**dadurch gekennzeichnet,**
- **dass** im Bereich des Basisrechners (2) eine Prioritätssteuerung vorgesehen ist, die Dateneingabe der unterschiedlichen Bedienterminals (3) funktionell koordiniert,
- **dass** die Kalibrierung der berührungssensitiven Fläche (10) eines Bedienterminals (3) auf eine von dort eingegebene Anforderung hin eingeleitet wird,
- **dass** die im Rahmen der Kalibrierung der berührungssensitiven Flächen (10) vorzunehmenden Rechen- und/oder Verfahrensschritte für alle Bedienterminals (3) zentral, aber individuell von dem Basisrechner (2) vorgenommen und/oder gesteuert werden, indem unter einer gemeinsamen Kalibrierungssoftware (26) des Basisrechners (2) erforderliche Offset- oder sonstige Korrekturparameter jeder beliebigen berührungssensitiven Fläche (10) bestimmt und an individuellen, der betreffenden berührungssensitiven Fläche (10) eindeutig zugeordneten oder zuordenbaren Speicherzellen (24; 30) zwecks Verrechnung mit allen weiteren Eingangssignalen (23) der betreffenden berührungssensitiven Fläche (10) hinterlegt werden, und
- **dass** während des Kalibrierungsvorgangs ein benutzerseitiges Umschalten auf ein anderes Bedienterminal (3) nicht möglich ist, indem vor dem Kalibrierungsvorgang ein Befehl an die Prioritätssteuerung geschickt wird, so dass diese bis zu einem entgegengesetzten Befehl nach Beendigung des Kalibrierungsvorgangs keine Prioritätsumschaltung durchführt.

2. Verfahren nach Anspruch 1,
**dadurch gekennzeichnet, dass** zur eindeutigen Zuordnung der Offset- oder sonstigen Korrekturparameter zu einer berührungssensitiven Fläche (10) dem betreffenden Bedienterminal (3) ein individuelles Zeichen zugeteilt wird, das die zuordenbaren Speicherzellen (24; 30) voneinander unterscheidet.

3. Verfahren nach Anspruch 2,
**dadurch gekennzeichnet, dass** das dem betreffenden Bedienterminal (3) zugeteilte, individuelle Zeichen den Eingangssignalen (20, 21, 25) dieser berührungssensitiven Fläche (10) vor oder während der Datenübertragung (4 - 6) zu dem Basisrechner (2) hinzugefügt wird.

4. Verfahren nach einem der Ansprüche 2 oder 3, d a-**durch gekennzeichnet, dass** zur Steuerung der zu kalibrierenden berührungssensitiven Fläche (10) eines Bedienterminals (3) für dieses bestimmte Steuerbefehle (25) durchgelassen, die Weiterleitung dieser Steuerbefehle an andere Bedienterminals (3) jedoch unterdrückt wird.

5. Verfahren nach Anspruch 4, **dadurch gekennzeichnet, dass** das einem Bedienterminal (3) zugeteilte Zeichen allen ausschließlich für dieses bestimmten Steuerbefehlen hinzugefügt wird.

6. Verfahren nach Anspruch 5, **dadurch gekennzeichnet, dass** in den downlinkseitigen von dem Basisrechner zu den Bedienterminals Signalpfaden (5, 13) Schaltfunktionen eingeschleift sind, welche je nach dem einem Steuerbefehl eingefügten Zeichen ein- oder ausgeschaltet werden.

7. Verfahren nach einem der vorhergehenden Ansprüche,
**dadurch gekennzeichnet, dass** in dem Basisrechner (2) .Informationen darüber abgespeichert werden, ob von einem Bedienterminal (3) eintreffende Koordinaten (23, 25) der berührungssensitiven Fläche (10) noch mit durch Kalibrierung ermittelten Offsetwerten (30) korrigiert werden müssen.

8. Verfahren nach einem der vorhergehenden Ansprüche,
**dadurch gekennzeichnet, dass** die Bildschirm-Ansteuersignale (19) von dem Basisrechner (2) an alle Bedienterminals (3) parallel versendet werden.

9. Computersystem, umfassend einen Basisrechner (2) mit einer arithmetisch-logischen Einheit und mehrere Bedienterminals (3), wobei die Signaleingangspfade (4) von sämtlichen Bedienterminals (3) zu dem Basisrechner (2) an einer Peripherieschnittstelle (5) zusammengeführt sind, wobei wenigstens eines der Bedienterminals (3) eine zu kalibrierende, berührungssensitive Fläche, insbesondere Folie (10), zur Eingabe von Informationen aufweist, **dadurch gekennzeichnet, dass**
a) im Rahmen der Peripherieschnittstelle (5) des Basisrechners (2) oder im Rahmen der Schnittstellen (13) der Bedienterminals (3) (je) eine Schaltung zur Identifizierung des Quellterminals (3) einer eingehenden Eingabeinformation vorgesehen ist, welche zu einer eingehenden Eingabeinformation eine Identitätsinformation zu dem betreffenden Quellterminal (3) erzeugt, die für die arithmetisch-logische Einheit des Basisrechners (2) lesbar zur Verfügung steht, und
b) wobei der Basisrechner (2) eine Steuereinheit umfasst, die derart ausgebildet und eingerichtet ist,
dass die im Rahmen der Kalibrierung der berührungssensitiven Fläche (10) des wenigstens einen Bedienterminals (3) vorzunehmenden Rechen- und/oder Verfahrensschritte von der Steuereinheit vorgenommen und/oder gesteuert werden können,
c) dass im Bereich des Basisrechners (2) eine Prioritätssteuerung vorgesehen ist, die Dateneingabe der unterschiedlichen Bedienterminals (3) funktionell koordiniert,
d) dass während des Kalibrierungsvorgangs ein benutzerseitiges Umschalten auf ein anderes Bedienterminal (3) nicht möglich ist, indem vor dem Kalibrierungsvorgang ein Befehl an die Prioritätssteuerung geschickt wird, so dass diese bis zu einem entgegengesetzten Befehl nach Beendigung des Kalibrierungsvorgangs keine Prioritätsumschaltung durchführt, und
e) dass mindestens ein Bedienterminal (3) derart ausgebildet ist, dass die Kalibrierung seiner berührungssensitiven Fläche (10) auf eine von dort eingegebene Anforderung hin eingeleitet wird.

10. Computersystem nach Anspruch 9, **dadurch gekennzeichnet, dass** im Rahmen der Schnittstelle (13) eines Bedienterminals (3) ein Identitätszeichengenerator vorgesehen ist, der ein terminalspezifisches Identitätszeichen erzeugt und der an den Basisrechner (2) zu übertragenden Information voranstellt, an- oder einfügt.

11. Computersystem nach Anspruch 10, **dadurch gekennzeichnet, dass** im Rahmen der Peripherieschnittstelle (5) des Basisrechners (2) jedem Eingangssignalpfad (4) ein Halteglied, bspw. ein RS-Flip-Flop, parallelgeschalten ist, um den Eingang eines Signals auf dem betreffenden Eingangssignalpfad (4) zu kennzeichnen.

12. Computersystem nach Anspruch 11, **dadurch gekennzeichnet, dass** an jeden Eingangssignalpfad (4), insbesondere an ein mit diesem gekoppeltes Halteglied, ein Eingangsbit einer Baugruppe zur Generierung eines Identitätssignals angekoppelt ist.

13. Computersystem nach Anspruch 12, **dadurch gekennzeichnet, dass** die Identifizierungsbaugruppe als Prioritäts-Decoder aufgebaut ist, um die 1-aus-n-Information an ihrem Eingang in eine Dualzahl umzuwandeln, die als Identitätsinformation über das betreffende Quellterminal (3) verwendet wird.

14. Computersystem nach einem der Ansprüche 10 bis 13, **dadurch gekennzeichnet, dass** der Ausgang der Identifizierungsbaugruppe mit einem Schieberegister gekoppelt ist, so dass eine Parallel-Serien-Wandlung möglich ist, und dass die serielle Identitätsinformation an einen weiteren Eingang eines Multiplexbausteins gelangt, an dem die verschiedenen Eingangssignalpfade (4; 20, 21, 25) des Basisrechners (2) oder des betreffenden Bedienterminals (3) zusammengeführt sind.

15. Computersystem nach einem der Ansprüche 10 bis 13, **dadurch gekennzeichnet, dass** die Identitätsinformation über weitere Datenleitungen parallel zu dem ggf. ebenfalls parallel gewandelten Eingangssignal von den zusammengeführten Eingangssignalpfaden (4) zu dem Basisrechner (2) übertragen wird.

16. Computersystem nach einem der Ansprüche 10 bis 15, **dadurch gekennzeichnet, dass** die Identitätsinformation ggf. zusammen mit dem betreffenden Eingangssignal unter einer vordefinierten Speicheradresse hinterlegt wird, auf welche der Basisrechner (2) zugreifen (28) kann.

17. Computersystem nach einem der Ansprüche 9 bis 16,
**dadurch gekennzeichnet, dass** bei Eingang eines Informationssignals (4) ein Softwareinterrupt (27) ausgelöst wird, der dem Basisrechner (2) den Informationseingang anzeigt.

18. Computersystem nach Anspruch 11 in Verbindung mit einem der Ansprüche 13 bis 17, **dadurch gekennzeichnet, dass** ein Ausgang der Identifizierungsbaugruppe mit dem Rücksetzeingang des Halteglieds gekoppelt ist, um dieses nach Erzeugung der Identitätsinformation zurückzusetzen.

19. Computersystem nach einem der Ansprüche 9 bis 18,
**dadurch gekennzeichnet, dass** der Basisrechner (2) über eine erste Steuermöglichkeit verfügt, um Ausgangssignale (4) gleichzeitig an alle Bedienterminals (3) zu versenden, und über eine zweite Steuermöglichkeit, um Ausgangssignale (4) selektiv an ein bestimmtes Bedienterminal (3) zu adressieren, so dass die übrigen Bedienterminals (3) die betreffenden Ausgangssignale (4) nicht erhalten oder nicht auswerten.

20. Computersystem nach Anspruch 19, **gekennzeichnet durch** eine Einrichtung in dem Basisrechner (2), die individuellen Ausgangssignalen (4) desselben eine Identitäts- oder Adressierungsinformation über das Zielterminal (3) dieses Ausgangssignals (4) voranstellt, ein- oder anfügt.

21. Computersystem nach Anspruch 20, **dadurch gekennzeichnet, dass** in einer Schnittstelleneinheit (5; 13) des Basisrechners (2) und/oder der Bedienterminals (3) ein die Identitäts- oder Adressierungsinformation auswertender Baustein vorgesehen ist.

22. Computersystem nach Anspruch 21, **dadurch gekennzeichnet, dass** in der Peripherieschnittstelle (5) des Basisrechners (2) ein Demultiplexer vorgesehen ist, der das individuelle Ausgangssignal (4) ausschließlich an das durch die Identitäts- oder Adressierungsinformation bezeichnete Bedienterminal (3) weiterleitet.

23. Computersystem nach Anspruch 21, **dadurch gekennzeichnet, dass** in der Schnittstelle (13) eines Bedienterminals (3) ein Schalter vorgesehen ist, dessen Stellung (EIN/AUS) über die Weiterleitung von dem Basisrechner (2) empfangener Ausgangssignale (4) entscheidet.

24. Computersystem nach Anspruch 23, **gekennzeichnet durch** eine Ansteuerung für den Schalter in der Schnittstelle (13) eines Bedienterminals (3), welche diesen dann einschaltet, wenn ein empfangenes Ausgangssignal (4) des Basisrechners (2) eine Identitäts- oder Adressierungsinformation enthält, die dem betreffenden Bedienterminal (3) oder allen Bedienterminals (3) zugeordnet ist.

25. Computersystem nach Anspruch 23, **gekennzeichnet durch** eine Ansteuerung für den Schalter in der Schnittstelle (13) eines Bedienterminals (3), welche diesen bei Empfang eines festgelegten, terminalspezifischen Steuersignals (4) des Basisrechners (2) einschaltet und ggf. bei Empfang eines weiteren Steuersignals (4) ausschaltet.

26. Computersystem nach einem der Ansprüche 9 bis 25, **dadurch gekennzeichnet, dass** in der Schnittstelle (13) eines Bedienterminals (3) ein Demultiplexer mit Weichenfunktion vorgesehen ist, der die empfangenen Ausgangssignale (4) von dem Basisrechner (2) an das jeweils angesprochenen Datenein- und/oder -ausgabegerät selektiv weiterleitet.

27. Computersystem nach Anspruch 22 und einem der Ansprüche 23 bis 25
**dadurch gekennzeichnet, dass** der Schalter in der Schnittstelle (13) eines Bedienterminals (3) zwischen dem Demultiplexer und dem betreffenden Datenein- und/oder -ausgabegerät (9, 10) angeordnet ist, so dass bspw. die Weiterleitung von Steuerbefehlen (25) für die berührungssensitive Fläche (10) selektiv unterdrückt werden kann, während gleichzeitig Steuerbefehle (19) für die Anzeigeeinheit (9) weitergeleitet werden.

## Claims

1. Method for operating a computer system (1), comprising a central computer (2) with an arithmetic-logic unit and a number of control terminals (3) with data input and output facilities (9 - 12) , wherein, as part of each control terminal (3), at least one screen is provided for data output (9) and for data input at least one touch-sensitive surface applied to a transparent plate on the relevant screen (9) or arranged in front of it, in particular a film (10), is provided, and with signal paths (4) directed from the control terminals (3) to the central computer (2) being merged at a peripheral interface (5) in the area (8) of the central computer (2),
**characterised in that**
- a priority controller is provided in the area of the central computer (2) which functionally coordinates the data input of the various control terminals (3),
- the calibration of the touch-sensitive surface (10) of a control terminal (3) is initiated in response to a request entered from there,
- the computation and/or method steps to be undertaken as part of the calibration of the touch-sensitive surfaces (10) are executed and controlled centrally but individually for all control terminals (3) by the central computer (2), by required offset or other correction parameters of any given touch-sensitive surface (10) being determined under a common calibration software of the central computer and stored in individual memory cells (24; 30) uniquely assigned to the relevant touch-sensitive surface (10) for the purposes of accounting with all further input signals (23) of the relevant touch-sensitive surface (10), and
- during the calibration process a user-side switchover to another control terminal (3) is not possible, **in that** before the calibration process a command is sent to the priority controller so that, until a cancellation command is received after the ending of the calibration process, the controller does not switch over the priority.

2. Method according to claim 1,
**characterised in that**, for unique assignment of the offset or other correction parameters to a touch-sensitive surface (10) the control terminal (3) is allocated an individual flag that distinguishes the assignable memory cells (24; 30) from one another.

3. Method according to claim 2,
**characterised in that** the individual flag allocated to the relevant control terminal is added to the input signals (20, 21, 25) of this touch-sensitive surface (1C) before or during the data transmission (4 - 6) to the central computer (2).

4. Method according to one of claims 2 or 3, **characterised in that**, for controlling the touch-sensitive surface (10) of a control terminal (3) to be calibrated, specific control commands (25) are let through for this terminal, but the forwarding of these control commands to other control terminals (3) is suppressed.

5. Method according to claim 4, **characterised in that** a flag allocated to a control terminal (3) is added to all control commands destined for this terminal.

6. Method according to claim 5, **characterized in that** switching functions are looped into the downlink-side signal paths (5, 13) from the central computer to the control terminals which are switched on or switched off depending on a flag added to a control command.

7. Method according to one of the previous claims, **characterised in that** information is stored in the central computer (2) about whether coordinates (23, 25) of the touch-sensitive surface (10) arriving from a control terminal (3) still have to be corrected with offset values (30) determined by calibration.

8. Method according to one of the previous claims, **characterized in that** the screen activation signals (19) are sent in parallel from the central computer (2) to all control terminals (3).

9. A computer system, comprising a central computer (2) with an arithmetic-logic unit and a number of control terminals (3), with the signalling input paths (4) from all control terminals (3) to the central computer (2) being merged at a peripheral interface (5), with at least one of the control terminals (3) having a touch-sensitive surface to be calibrated, especially a film (10), for entry of information, **characterised in that**
a) as part of the peripheral interface (5) of the central computer (2) or within the framework of the interface (13) of the control terminal (3) a circuit is provided (in each case) for identifying the source terminal (3) of incoming input information, which generates for incoming information identity information for the source terminal (3) concerned, which is available in readable form for the arithmetic-logic unit of the central computer (2), and
b) with the central computer (2) comprising a control unit which is embodied and configured such that, the computing and/or method steps to be performed as part of the calibration of the touch-sensitive surface (10) of the at least one control terminal (3) can be undertaken and/or controlled by the control unit,
c) a priority control is provided in the area of the central computer (2) which functionally coordinates the data input of the various control terminals (3),
d) during the calibration process a user-side switchover to another control terminal (3) is not possible, **in that** before the calibration process a command is sent to the priority controller so that, until a cancellation command is received after the ending of the calibration process, the controller does not switch over the priority, and
e) at least one control terminal (3) is embodied such that the calibration of its touch-sensitive surface (10) is initiated in response to a request entered from there.

10. Computer system according to claim 9, **characterised in that** an identity flag generator is provided as part of the interface (13) of a control terminal (3) which creates a terminal-specific identity flag and prefixes the information to be sent to the central computer (2) with it, appends it to or inserts it into said information.

11. Computer system according to claim 10, **characterised in that**, as part of the peripheral interface (5) of the central computer (2) each input signal path (4) is connected in parallel to a hold element, for example an RS flip-flop, in order to identify the input of a signal on the relevant signal path (4).

12. Computer system according to claim 11, **characterised in that** an input bit of a module for generation of an identity signal is coupled to each input signal path (4) especially to a holding element coupled to said path.

13. Computer system according to claim 12, **characterised in that** the identification module is structured as a priority decoder to convert the 1-from-n information at its input into a binary number which is used as identity information via the relevant source terminal (3).

14. Computer system according to one of claims 10 to 13, **characterised in that** the output of the identification module is coupled to a shift register, so that a parallel-serial conversion is possible and that the serial identity information reaches a further input of a multiplexer chip at which the different input signal paths (4; 20, 21, 25) of the central computer (2) or of the relevant control terminal (3) are merged.

15. Computer system according to one of claims 10 to 13, **characterised in that** the identity information is transmitted over further data lines in parallel to the possibly likewise parallel-converted input signal from the merged input signal paths (4) to the central computer (2).

16. Computer system according to one of claims 10 to 15, **characterised in that** the identity information, possibly together with the relevant input signal, is stored under a predefined memory address which the central computer (2) can access (28).

17. Computer system according to one of claims 9 to 16, **characterised in that**, on input of an information signal (4), a software interrupt (27) is triggered which indicates the input of information to the central computer (2).

18. Computer system according to claim 11 in conjunction with one of the claims 13 to 17, **characterised in that** an output of the identification module is coupled to the reset input of the hold element in order to reset the latter after creation of the identity information.

19. Computer system according to one of claims 9 to 18, **characterised in that** the central computer (2) has a first control option for sending output signals (4) simultaneously to all control terminals (3) and a second control option for addressing output signals (4) selectively to a specific control terminal (3), so that the other control terminals (3) do not receive or do not evaluate the relevant output signals (4).

20. Computer system according to claim 19, **characterised by** a device in the central computer (2), which prefixes individual output signals (4) of said computer with identity or addressing information about the destination terminal (3) of this output signal (4) appends it to them or inserts it into them.

21. Computer system according to claim 20, **characterised in that** a chip evaluating the identity or addressing information is provided in an interface unit (5; 13) of the central computer (2) and/or of the control terminal (3).

22. Computer system according to claim 21, **characterised in that** a demultiplexer is provided in the peripheral interface (5) of the central computer (2) which forwards the individual output signal (4) exclusively to the control terminal identified by the identity or addressing information (3).

23. Computer system according to claim 21, **characterised in that** a switch is provided in the interface (13) of a control terminal (3) of which the position (ON/OFF) decides on the forwarding of output signals (4) received from the central computer (2).

24. Computer system according to claim 23, **characterised by** a control for the switch in
the interface (13) of a control terminal (3), which switches this on when a received output signal (4) of the central computer (2) contains identity or addressing information which is assigned to the relevant control terminal (3) or all control terminals (3).

25. Computer system according to claim 23, **characterised by** a control for the switch in the interface (13) of a control terminal (3), which switches the latter on on receipt of a defined terminal-specific control signal (4) of the central computer (2) and switches it off again if necessary on receipt of a further control signal (4).

26. Computer system according to one of claims 9 to 25, **characterised in that** a demultiplexer with branching function is provided in the
interface (13) of a control terminal (3) which forwards the received output signals (4) selectively from the central computer (2) to the respective addressed data input and/or output device.

27. Computer system according to claim 22 and one of claims 23 to 25, **characterised in that** the switch is arranged in the interface (13) of a control terminal (3) between the demultiplexer and the relevant data input and/or output device (9, 10), so that for example the forwarding of control commands(25) for the touch-sensitive surface (10) can be selectively suppressed while control commands (19) for the display unit (9) are simultaneously selectively forwarded.

## Revendications

1. Procédé pour faire fonctionner un système informatique (1) comprenant un ordinateur de base (2) doté d'une unité arithmétique et logique et plusieurs terminaux de commande (3) dotés de possibilités (9 - 12) d'entrée et de sortie de données, dans le cadre de chaque terminal de commande (3) étant prévu pour la sortie de données au moins un écran (9) et pour l'entrée de données au moins une surface tactile, en particulier feuille tactile (10), appliquée sur l'écran (9) concerné ou sur une plaque transparente placée devant celui-ci, et les chemins de signaux (4) menant des terminaux de commande (3) vers l'ordinateur de base (2) étant réunis sur une interface périphérique (5) dans la zone (8) de l'ordinateur de base (2),
**caractérisé en ce que**
- une commande de priorité est prévue dans la zone de l'ordinateur de base (2), qui coordonne de manière fonctionnelle les entrées de données des différents terminaux de commande (3),
- **en ce que** le calibrage de la surface tactile (10) d'un terminal de commande (3) est déclenché suite à une demande faite depuis celui-ci,
- **en ce que** les étapes de calcul et/ou de procédé à effectuer dans le cadre du calibrage des surfaces tactiles (10) sont effectuées et/ou commandées pour tous les terminaux de commande (3) de manière centralisée, mais individuellement par l'ordinateur de base (2) en déterminant, sous un logiciel de calibrage commun (26) de l'ordinateur de base (2), les paramètres offset nécessaires ou autres paramètres de correction de n'importe quelle surface tactile (10) et en mémorisant ceux-ci dans des cellules de mémoire (24 ; 30)individuelles, univoquement affectées ou affectables à la surface tactile (10) concernée, pour les compenser avec tous les autres signaux d'entrée (23) de la surface tactile (10) concernée, et
- **en ce qu'**au cours de l'opération de calibrage, une commutation côté utilisateur sur un autre terminal de commande (3) n'est pas possible, une instruction étant envoyée avant l'opération de calibrage à la commande de priorité de sorte que celle-ci n'effectue pas de commutation de priorité jusqu'à une instruction contraire au terme de l'opération de calibrage.

2. Procédé selon la revendication 1,
**caractérisé en ce qu'**en vue de l'affectation univoque des paramètres offset ou autres paramètres de correction à une surface tactile (10), un signe individuel est attribué au terminal de commande (3) concerné, qui permet de distinguer les unes des autres les cellules de mémoire (24 ; 30) affectables.

3. Procédé selon la revendication 2,
**caractérisé en ce que** le signe individuel attribué au terminal de commande (3) concerné est ajouté aux signaux d'entrée (20, 21, 25) de cette surface tactile (10), avant ou pendant la transmission de données (4 - 6) vers l'ordinateur de base (2).

4. Procédé selon l'une des revendications 2 ou 3, **caractérisé en ce que** pour commander la surface tactile (10) à calibrer d'un terminal de commande (3), les instructions de commande (25) destinées à celui-ci sont autorisées à passer, la transmission de ces instructions de commande à d'autres terminaux de commande (3) étant en revanche empêchée.

5. Procédé selon la revendication 4, **caractérisé en ce que** le signe attribué à un terminal de commande (3) est ajouté à toutes les instructions de commande destinées exclusivement à celui-ci.

6. Procédé selon la revendication 5, **caractérisé en ce que** des fonctions logiques sont intégrées dans les chemins de signaux (5, 13) côté liaison descendante de l'ordinateur de base vers les terminaux de commande, qui sont enclenchées ou déclenchées en fonction du signe ajouté à une instruction de commande.

7. Procédé selon l'une des revendications précédentes, **caractérisé en ce que** des informations sont enregistrées dans l'ordinateur de base (2), portant sur la question de savoir si des coordonnées (23, 25) de la surface tactile (10), qui arrivent d'un terminal de commande (3), sont encore à corriger avec des valeurs offset (30) déterminées par calibrage.

8. Procédé selon l'une des revendications précédentes, **caractérisé en ce que** les signaux de commande (19) de l'écran sont envoyés en parallèle à tous les terminaux de commande (3) par l'ordinateur de base (2).

9. Système informatique comprenant un ordinateur de base (2) doté d'une unité arithmétique et logique et plusieurs terminaux de commande (3), les chemins d'entrée de signaux (4) menant de l'ensemble des terminaux de commande (3) vers l'ordinateur de base (2) étant réunis sur une interface périphérique (5), au moins l'un des terminaux de commande (3) présentant une surface tactile, en particulier feuille tactile (10) à calibrer, destinée à l'entrée des informations, **caractérisé en ce que**
a) dans le cadre de l'interface périphérique (5) de l'ordinateur de base (2) ou dans le cadre de l'interface (13) de chacun des terminaux de commande (3) un circuit est prévu, permettant d'identifier le terminal source (3) d'une information d'entrée arrivant et générant pour une information d'entrée arrivant une information d'identité pour le terminal source (3) concerné, qui est mise à disposition de l'unité arithmétique et logique de l'ordinateur de base (2) de manière lisible,
b) l'ordinateur de base (2) comprenant une unité de commande, qui est réalisée et configurée de telle manière que les étapes de calcul et de procédé à effectuer dans le cadre du calibrage de la surface tactile (10) dudit au moins un terminal de commande (3) peuvent être effectuées et/ou commandées par l'unité de commande,
c) **en ce qu'**une commande de priorité est prévue dans la zone de l'ordinateur de base (2), qui coordonne de manière fonctionnelle les entrées de données des différents terminaux de commande (3),
d) **en ce qu'**au cours de l'opération de calibrage une commutation côté utilisateur sur un autre terminal de commande (3) n'est pas possible, une instruction étant envoyée avant l'opération de calibrage à la commande de priorité de sorte que celle-ci n'effectue pas de commutation de priorité jusqu'à une instruction contraire au terme de l'opération de calibrage, et
e) **en ce qu'**au moins un terminal de commande (3) est réalisé de telle manière que le calibrage de sa surface tactile (10) est déclenché suite à une demande faite depuis celui-ci.

10. Système informatique selon la revendication 9, **caractérisé en ce que** dans le cadre de l'interface (13) d'un terminal de commande (3) un générateur de signes d'identité est prévu, qui génère un signe d'identité spécifique au terminal et le place devant, l'ajoute ou l'insère dans l'information à transmettre à l'ordinateur de base (2).

11. Système informatique selon la revendication 10, **caractérisé en ce que** dans le cadre de l'interface périphérique (5) de l'ordinateur de base (2), un circuit de maintien, p. ex. une bascule RS, est monté en parallèle à chaque chemin de signaux d'entrée (4) afin d'identifier l'entrée d'un signal sur le chemin de signaux d'entrée (4) concerné.

12. Système informatique selon la revendication 11, **caractérisé en ce qu'**un bit d'entrée d'un module est couplé à chaque chemin de signaux d'entrée (4), en particulier à un circuit de maintien couplé avec celui-ci, pour générer un signal d'identité.

13. Système informatique selon la revendication 12, **caractérisé en ce que** le module d'identification est construit sous forme de décodeur de priorité de manière à convertir l'information d'un parmi N à son entrée en un nombre binaire, utilisé comme information d'identité sur le terminal source (3) concerné.

14. Système informatique selon l'une des revendications 10 à 13, **caractérisé en ce que** la sortie du module d'identification est couplée avec un registre à décalage de manière à permettre une conversion parallèle-série, et **en ce que** l'information d'identité sérielle parvient à une autre entrée d'un module multiplex, où sont réunis les différents chemins de signaux d'entrée (4 ; 20, 21, 25) de l'ordinateur de base (2) ou du terminal de commande (3) concerné.

15. Système informatique selon l'une des revendication 10 à 13, **caractérisé en ce que** l'information d'identité est transmise via d'autres circuits de données en parallèle au signal d'entrée, converti le cas échéant également en parallèle, des chemins de signaux d'entrée (4) vers l'ordinateur de base (2).

16. Système informatique selon l'une des revendications 10 à 15, **caractérisé en ce que** l'information d'identité, le cas échéant conjointement avec le signal d'entrée concerné, est enregistrée sous une adresse de mémoire définie à l'avance, à laquelle l'ordinateur de base (2) peut accéder (28).

17. Système informatique selon l'une des revendications 9 à 16, **caractérisé en ce qu'**à l'entrée d'un signal d'information (4) une interruption logicielle (27) est déclenchée, qui indique à l'ordinateur de base (2) l'entrée de l'information.

18. Système informatique selon la revendication 11 en combinaison avec l'une des revendications 13 à 17, **caractérisé en ce qu'**une sortie du module d'identification est couplée avec l'entrée de réinitialisation du circuit de maintien afin de réinitialiser celui-ci après génération de l'information d'identité.

19. Système informatique selon l'une des revendications 9 à 18, **caractérisé en ce que** l'ordinateur de base (2) dispose d'une première possibilité de commande permettant d'envoyer des signaux de sortie (4) simultanément à tous les terminaux de commande (3), et d'une seconde possibilité de commande permettant d'adresser les signaux de sortie (4) de manière sélective à un terminal de commande (3) déterminé, tel que les autres terminaux de commande (3) ne reçoivent ou n'évaluent pas les signaux de sortie (4) concernés.

20. Système informatique selon la revendication 19, **caractérisé par** un dispositif prévu dans l'ordinateur de base (2), qui place devant, insère ou ajoute à des signaux de sortie individuels de celui-ci une information d'identité ou d'adressage sur le terminal cible (3) de ce signal de sortie (4) .

21. Système informatique selon la revendication 20, **caractérisé en ce qu'**un module évaluant l'information d'identité ou d'adressage est prévu dans une unité d'interface (5; 13) de l'ordinateur de base (2) et/ou des terminaux de commande (3).

22. Système informatique selon la revendication 21, **caractérisé en ce qu'**un démultiplexeur est prévu dans l'interface périphérique (5) de l'ordinateur de base (2), qui retransmet le signal de sortie individuel exclusivement au terminal de commande (3) désigné par l'information d'identité ou d'adressage.

23. Système informatique selon la revendication 21, **caractérisé en ce qu'**un commutateur est prévu dans l'interface (13) d'un terminal de commande (3), dont la position (ON/OFF) décide de la retransmission de signaux de sortie reçus par l'ordinateur de base (2).

24. Système informatique selon la revendication 23, **caractérisé par** une commande pour le commutateur prévu dans l'interface (13) d'un terminal de commande (3), qui enclenche le commutateur lorsqu'un signal de sortie (4) reçu de l'ordinateur de base (2) contient une information d'identité ou d'adressage qui est attribuée au terminal de commande (3) concerné ou à tous les terminaux de commande (3).

25. Système informatique selon la revendication 23, **caractérisé par** une commande pour le commutateur prévu dans l'interface (13) d'un terminal de commande (3), qui enclenche le commutateur à réception d'un signal de commande (4) défini et spécifique au terminal de l'ordinateur de base (2) et, le cas échéant, le débranche à réception d'un autre signal de commande (4).

26. Système informatique selon l'une des revendications 9 à 25, **caractérisé en ce qu'**un démultiplexeur doté d'une fonction d'aiguillage est prévu dans l'interface (13) d'un terminal de commande (3), qui retransmet de manière sélective les signaux de sortie (4) reçus de l'ordinateur de base (2) à l'unité d'entrée et/ou de sortie de données adressée.

27. Système informatique selon la revendication 22 et l'une des revendications 23 à 25, **caractérisé en ce que** le commutateur prévu dans l'interface (13) d'un terminal de commande (3) est disposé entre le démultiplexeur et l'unité d'entrée et/ou de sortie de données concernée, permettant ainsi par exemple d'empêcher sélectivement la retransmission d'instructions de commande (25) pour la surface tactile (10) tout en retransmettant des instructions de commande (19) pour l'unité d'affichage (9).
